(19) Europäisches Patentamt

European Patent Office

Office européen des brevets

(11) Publication number: **0 320 290 B1**

# EUROPEAN PATENT SPECIFICATION

(45) Date of publication of patent specification: **18.11.93**    (51) Int. Cl.⁵: **B60C  9/20**, B60C 9/00

(21) Application number: **88311693.1**

(22) Date of filing: **09.12.88**

(54) **Pneumatic radial tires.**

(30) Priority: **10.12.87 JP 311056/87**

(43) Date of publication of application:
**14.06.89 Bulletin  89/24**

(45) Publication of the grant of the patent:
**18.11.93 Bulletin  93/46**

(84) Designated Contracting States:
**DE ES FR GB IT LU**

(56) References cited:
**EP-A- 0 098 616
GB-A- 536 133
GB-A- 2 151 670
US-A- 3 298 417
US-A- 4 485 063**

(73) Proprietor: **Bridgestone Corporation
1-1, Kyobashi 1-Chome
Chuo-Ku
Tokyo 104(JP)**

(72) Inventor: **Kadota, Kuninobu
5-9-201, Ogawahigashi-Cho 3-Chome
Kodaira City Tokyo(JP)**
Inventor: **Imai, Isamu
2148-15, Kume
Tokorozawa City Saitama Pref.(JP)**
Inventor: **Inada, Norio
4-3-310, Ogawahigashi-Cho 3-Chome
Kodaira City Tokyo(JP)**

(74) Representative: **Whalley, Kevin et al
MARKS & CLERK
57/60 Lincoln's Inn Fields
London WC2A 3LS (GB)**

## Description

This invention relates to pneumatic radial tires used under high internal pressure and heavy load, such as airplane tires and so on, and more particularly to an improvement of a belt structure in the pneumatic radial tire capable of simultaneously improving cut resistance, durability and resistance to uneven wear.

The tires used under high internal pressure and heavy load are required to have a belt composed of a plurality of cord layers from a viewpoint of pressure resistance. Particularly, in pneumatic radial tires for airplanes, it is demanded that the breakage is not caused at a pressure of four times higher than the service pressure in the pressure test.

In this connection, there is known a circumferential belt structure containing cords arranged in a direction substantially parallel to the equator of the tire (hereinafter referred to as the circumferential direction), which can advantageously satisfy the desired pressure strength at a minimum number of belt layers. Further, there is proposed a composite belt structure composed of the above circumferential cord layer and cross cord layers, cords of which layers being crossed with each other with respect to the equator of the tire.

In the belt composed of many circumferential cord layers, tension produced in the belt on the circumference of the tire is high, so that the tire is apt to suffer cut damage through stones, iron pieces and the like scattered on the road surface.

Since tires for use on ordinary vehicles do not undergo severe use conditions, even when external damage is caused to a certain extent, there is no problem of the tire bursting. However, in tires used under high internal pressure and heavy load such as airplane tires, bursting occurs as a result of the external damage, so that poor cut resistance becomes a serious problem.

Further, when a plurality of circumferential cord layers are used in the belt, the elongation of the belt in the circumferential direction is restrained, so that there is not completely solved the problem that uneven wear is apt to be caused due to the dragging of the shoulder portion.

On the other hand, in the belt structure composed of cross cord layers containing cords arranged at an inclination angle of 10°-70° with respect to the equator of the tire, stretching is apt to be caused due to the change of cord angle or deformation of rubber between cords as compared with the case of the circumferential cord layer, so that the above resistance to uneven wear and cut resistance are largely improved, but the number of belt layers required for the pressure resistance increases as compared with the belt structure of circumferential cord layers, and when it is particularly used under heavy load, the heat built-up increases to raise the temperature of the belt portion and consequently separation failure at the belt portion is prematurely caused.

Attention is drawn to US-A-3298417, which describes using a cord of a nylon-6, 6 polymer for reinforcing tires, in particular bias tires.

It is, therefore, an aim of the invention to advantageously overcome the aforementioned problems and to provide a belt structure simultaneously satisfying the requirements of cut resistance, resistance to uneven wear and durability.

According to the invention, there is provided a heavy duty pneumatic radial tire for use under a high internal pressure, comprising a carcass of toroidal radial structure composed of a plurality of plies each containing organic fiber cords arranged in parallel to each other, and a belt superimposed about a crown of the carcass for reinforcing the tire tread and containing organic fiber cords arranged in parallel to each other, wherein the said belt is formed by arranging a plurality of rubberized layers each containing cords made from fibers of nylon-6, 6 polymer having not less than 95 mol% of polyhexamethylene adipamide repeating structural unit, characterized in that the fibres of the said cords have a strength of not less than 9.0 g/d and an initial modulus of not more than 80 g/d at a state of dipped cord after twisting and treating with an adhesive.

Preferably the cords of the rubberized layers are crossed with each other at an inclination angle of 10° to 70° with respect to the equatorial plane of the tire.

In a preferred embodiment of the invention, the cord has a strength of not less than 9.5 g/d at the dipped cord state.

The strength S (g/d) at dipped cord state after twisting and treating with adhesive is represented by the following equation:

S = Sd/D (g/d), provided that D = Dd × (100/100 + Pd) where Sd is a load at rupture under a load (g), Dd is a weight denier measured in the dipped cord (d) and Pd is a dipping pick up measured by dissolution method (%). Moreover, Sd, Dd and Pd are measured according to JIS L1017.

Further, the initial modulus M (g/d) is an initial tensile resistance degree (g/d) in the load-elongation curve of the dipped cord at standard test according to JIS L1017. That is, in the load-elongation curve, a maximum point of load change to elongation change is measured near to origin, and a normal line drawn from an intersect between a tangent at this point and the abscissa to 10% elongation intersects with the above tangent, at which a load W is measured. The measured load W is used to measure the initial modulus by the following equation:

M (g/d) = 10 x W/D, provided that D = Dd × (100/100 + Pd) The initial modulus is given as an average value of 10 or more measured values.

The invention will be described with reference to the accompanying drawings, wherein:

Fig. 1 is a schematically sectional view of an embodiment of an airplane tire according to the invention; and

Fig. 2 is a graph showing the calculation means of the initial modulus.

In order to prevent the separation failure unavoidable in case of the belt structure composed of cross cord layers, it is necessary to use high strength cords and reduce the number of cord layers used in the belt. For example, when the high strength cord made from polyamide or the like is used for the above purpose, the number of the cord layers can be reduced, but cracks still occur in the end portion of the belt to cause the separation failure.

Because the deformation state of the cross cord layers, i.e. deformation of the belt, bears the whole deformation by the elongation of the cord itself, deformation of rubber between cords and the change of cord angle, when the modulus of the cord is high as in the aramide or the like, the cord itself hardly elongates and consequently the deformation concentrates in the rubber between cords to prematurely cause the separation failure. Moreover, there is known a structure mitigating the concentration of strain in the end portion of the belt by particularly folding another cord layer to enclose the belt end portion therein, but in this case the durability is still insufficient.

For this end, the cords having low modulus and high strength become particularly advantageous.

As such a cord for the tire, there are nylon-6,6 cords because of a good adhesion property to rubber, which are widely used in bias tires for airplanes and the like, as disclosed for example in US-A-3298417.

However, in the case of radial tires using the belt of cross cord layers, even when the conventionally used nylon-6,6 cords are applied as they are, since the carcass ply cords are arranged in the radial direction, the circumferential tension should be born mainly by the belt different from the bias tire, so that the total thickness of the crown portion necessarily increases as compared with the bias tire, or the number of belt cord layers increases as compared with the radial tire using the belt composed of the circumferential cord layers. Consequently, in the large size tires, the heat build-up particularly increases, and the problem of durability can not yet be solved.

According to the invention, therefore, it is necessary that high-strength nylon-6,6 cords containing not less than 95 mol% of polyhexamethylene adipamide repeating structural unit and having a strength of not less than 9.0 g/d, preferably not less than 9.5 g/d and an initial modulus of not more than 80 g/d at a state of dipped cord after twisting and treating with adhesive are arranged in parallel to each other in each of the plural belt cord layers and the cords of these layers are preferably crossed with each other at an inclination angle of 10° to 70° with respect to the equator of the tire. That is, the belt composed of the above cross cord layers according to the invention satisfies the pressure test without excessively increasing the number of belt cord layers, and the separation failure at the belt portion due to the excessive heat build-up can be prevented. Further, this cord is relatively low in modulus, so that the strain concentration in rubber between cords at the end portion of the belt is small and the durability is considerably improved. Moreover, the belt according to the invention is composed of cross cord layers as mentioned above, so that the belt is easy to stretch in the circumferential direction, and the resistance to uneven wear and cut resistance are simultaneously improved.

In order to improve the durability against the separation failure at the end portion of the belt composed of the cross cord layers, the belt is preferably constructed by folding both end portions of the belt cord layer.

When the tire is used at a high speed as in the airplane tire, a single circumferential cord layer may be arranged on the outer periphery of the above belt for improving resistance to standing waves and resistance to peeling at the belt portion through centrifugal force. If a plurality of circumferential cord layers are arranged on the outer periphery of the belt, the cut resistance and resistance to uneven wear are undesirably damaged as previously mentioned.

Yarns for the high-strength nylon-6,6 cord used in the belt cord layer are manufactured by a method described in Japanese Patent laid open No. 60-162,828.

The following examples are given in illustration of the invention and are not intended as limitations thereof.

Yarns shown in the following Table 1 can be used within a range of 0.3˜0.6 as a twisting coefficient represented by the following equation (1):

$$NT = T \times \sqrt{0.139 \times \overline{(D/2)/\rho}} \times 10^{-3} \qquad (1)$$

where NT is a twisting coefficient, T is twisting number (twists/10 cm), D is total denier and $\rho$ is specific gravity of cord. When the twisting coefficient is too small, the resistance to compressive fatigue in the cord is poor, while when it is too large, the strength of the cord unfavorably lowers.

Table 1

|  | Comparative Example 1 | Example 1 |
|---|---|---|
| Yarn denier (d) | 6.0 | 3.1 |
| Total denier (d) | 1260 | 1260 |
| Strength (g/d) | 8.8 | 12.5 |
| Initial modulus (g/d) | 36.0 | 65.0 |
| Elongation at break (%) | 22.8 | 13.5 |
| Heat shrinkage 150°C (%) | 8.6 | 9.0 |

The properties of dipped cords after the twisted cords having, for example, a twisting coefficient of 0.46 were treated with an adhesive of usual RFL are shown in the following Table 2.

The initial modulus shown in Table 2 is represented as an average value of 10 or more measured values according to the following equation:

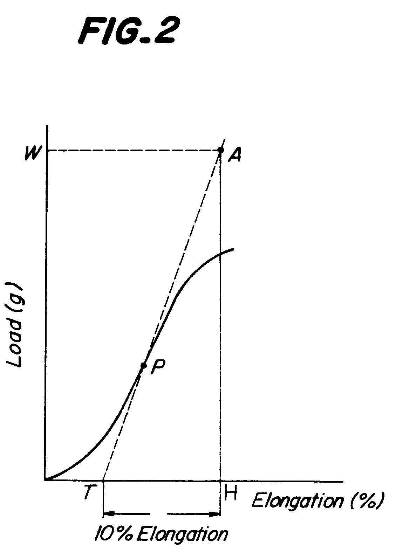

M (g/d) = 10 × W/D, provided that D = Dd × (100/100 + Pd) As to the initial tensile resistance degree (g/d) defined according to JIS L1017, the load-elongation curve of the dipped cord is depicted as shown by a solid line in Fig. 2, from which is determined a maximum point (P) of load change to elongation change near to the origin. Then, a tangent line (dotted lines) is depicted at this point to measure an intersect (T) with the abscissa. Thereafter, a normal line is drawn at a point (H) of 10% elongation from this point (T) to measure an intersect (A) with the tangent line. A load (W) at this intersect is read and substituted into the above equation.

Table 2

|  | Comparative Example 1 | Example 1 | Example 2 |
|---|---|---|---|
| Construction (denier) | 1260×2/2 | 1260×2/2 | 1260×2/3 |
| Twisting number (up and down) | 26×26 | 26×26 | 21×21 |
| Strength (g/d) | 7.9 | 10.2 | 9.9 |
| Tenacity (kg) | 42.0 | 54.0 | 79.0 |
| Initial modulus (g/d) | 40 | 40 | 40 |
| Elongation at break (%) | 20.0 | 19.0 | 19.0 |
| Heat shrinkage (%) | 4.2 | 4.5 | 4.5 |

The above cords are used in a cord layer of the belt to produce various tires as mentioned below.

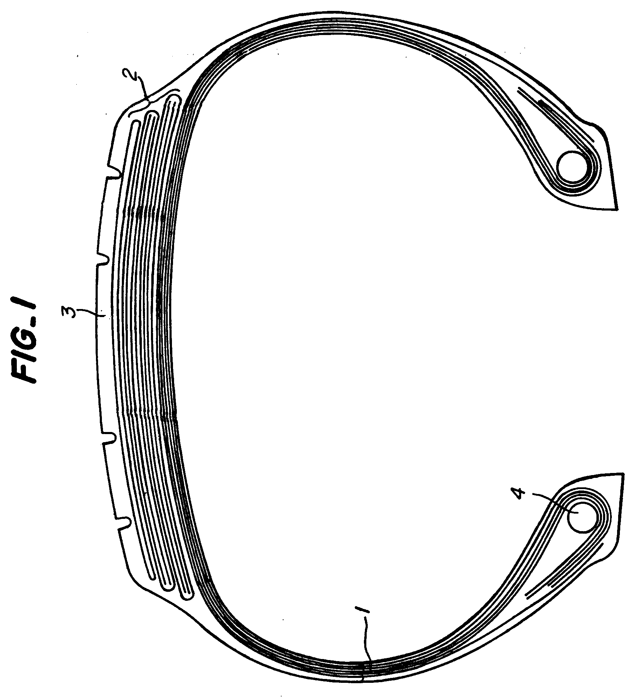

In Fig. 1 is shown an embodiment of an airplane tire according to the invention, wherein numeral 1 is a carcass, numeral 2 a belt composed of cross cord layers, numeral 3 a tread and numeral 4 a bead core.

This airplane tire has a tire size of H46 x 18.0 R20, wherein nylon-6,6 cords (1680 d/3) are arranged in the carcass at an angle of approximately 90° with respect to the equator of the tire.

In this embodiment, the carcass 1 has an up-down lamination structure consisting of 4 turnup plies turned around the bead core 4 from the inside to outside of the tire and 1 down ply extending along the outside of the turnup portion toward the bead toe.

The cross cord layers of the belt 2 in this embodiment are 10 as a whole, wherein one belt ply is folded to form two belt layers and further two belt plies each having free side ends are included in the folded belt ply.

In the following Table 3 are shown results measured on belt durability, resistance to uneven wear (worn amount of rib at shoulder portion) and cut resistance (load causing belt break at the pushing of protrusion)

4

in the belt structure of various examples including Example A of Fig. 1 and comparative examples.

The carcass structure of each tire in Table 3 is the same as in Fig. 1. Further, the number of cord layers in each belt structure of Table 3 is set so as to satisfy the pressure test (no breakage at a pressure corresponding to 4 times service pressure).

In Table 3, the test for the belt durability is according to FAA standard, wherein a take-off simulation raising a speed from 0 mile/h to 225 mile/h under a load and removing the load is repeated 50 times. If the take-off simulation of 50 times is completed, the tire is cut and the crack state in the belt portion is observed.

As to the resistance to uneven wear, the worn amount of rib at the tread shoulder portion (average worn depth of each rib) after the wear accelerating test on a drum is represented by an index on the basis that the worn amount of rib at the central rib is 100. As the index value becomes near to 100, the worn amount of shoulder rib approaches to the worn amount of rib at the tread central portion, which shows the improvement of resistance to uneven wear in the shoulder ribs.

As to the cut resistance, a protrusion having a semispherical tip of $20\phi$ is pushed to the tire to measure a load causing the breakage of belt cord.

Table 3(a)

| Belt structure<br>- - - - - circumferential cord layer<br>——— cross cord layer | | | | |
|---|---|---|---|---|
| Circumferential cord layer | number | – | 1P | – |
| | cord angle | – | 0° | – |
| | cord material | – | high-strength nylon-6,6 | – |
| | kind of cord | – | 1260d 2/3 | – |
| | end count/5 cm | – | 30 | – |
| Cross cord layer | number | 10P | 8P | 13P |
| | cord angle | alternately crossed at 20° in left and right | alternately crossed at 20° in left and right | alternately crossed at 20° in left and right |
| | cord material | high-strength nylon-6,6 * | high-strength nylon-6,6 * | nylon-6,6 |
| | kind of cord | 1260d 2/2 | 1260d 2/3 | 1260d 2/2 |
| | end count/5 cm | 36 | 30 | 36 |
| Belt durability | | completely run 50 times (no crack in belt portion) | completely run 50 times (no crack in belt portion) | occurrence of belt separation at running of 30 times |
| Worn amount of rib at shoulder portion (index based on 100 of tread central rib) | | 100 | 108 | 105 |
| Load causing belt break at the pushing of protrusion (index based on 100 of normal load) | | no belt break under 100% load | no belt break under 100% load | no belt break under 100% load |
| | | Example A | Example B | Comparative Example C |

\* High strength nylon-6,6 is cords of Examples 1 and 2 in Table 2 and nylon-6,6 is a cord of Comparative Example 1 in Table 2

EP 0 320 290 B1

Table 3(b)

| Belt structure | | Comparative Example D | Comparative Example E | Comparative Example F |
|---|---|---|---|---|
| ----- circumferential cord layer | | | | |
| ——— cross cord layer | | | | |
| Circumferential cord layer | number | – | 11P | 8P |
| | cord angle | – | 0° | 0° |
| | cord material | – | nylon-6,6 | nylon-6,6 |
| | kind of cord | – | 1260d 2/2 | 1260d 2/2 |
| | end count/5 cm | – | 36 | 36 |
| Cross cord layer | number | 8P | – | 4P |
| | cord angle | alternately crossed at 20° in left and right | – | alternately crossed at 20° in left and right |
| | cord material | aramid | – | nylon-6,6 |
| | kind of cord | 1500d 2/2 | – | 1260d 2/2 |
| | end count/5 cm | 30 | – | 36 |
| Belt durability | | occurrence of belt separation at running of 15 times | completely run 50 times (no crack in belt portion) | occurrence of belt separation at running of 45 times |
| Worn amount of rib at shoulder portion (index based on 100 of tread central rib) | | 110 | 260 | 120 |
| Load causing belt break at the pushing of protrusion (index based on 100 of normal load) | | no belt break under 100% load | occurrence of belt break under 28% load | occurrence of belt break under 60% load |

As mentioned above, according to the invention, the resistance to uneven wear and the cut resistance of the heavy duty pneumatic radial tire can be simultaneously improved without adversely affecting the durability, which has not previously been possible with the conventional tires.

The tires according to the invention may be pneumatic radial tires for use on heavy load vehicles under high internal pressure.

**Claims**

1. A heavy duty pneumatic radial tire for use under a high internal pressure, comprising a carcass (1) of toroidal radial structure composed of a plurality of plies each containing organic fiber cords arranged in parallel to each other, and a belt (2) superimposed about a crown (3) of the carcass for reinforcing the tire tread and containing organic fiber cords arranged in parallel to each other , wherein the said belt is formed by arranging a plurality of rubberized layers each containing cords made from fibers of nylon-6, 6 polymer having not less than 95 mol% of polyhexamethylene adipamide repeating structural unit, characterized in that the fibres of the said cords have a strength of not less than 9.0 g/d and an initial modulus of not more than 80 g/d at a state of dipped cord after twisting and treating with an adhesive.

2. A pneumatic radial tire as claimed in claim 1, characterized in that the cords of said rubberized layers are crossed with each other at an inclination angle of 10° to 70° with respect to the equatorial plane of the tire.

3. A pneumatic radial tire as claimed in claim 1 or 2, characterized in that said cord has a strength of not less than 9.5 g/d at the dipped cord state.

4. A pneumatic radial tire as claimed in any of claims 1 to 3, characterized in that yarn constituting said cord has a twisting coefficient NT of 0.3-0.6 represented by the following equation.

$$NT = T \times \sqrt{0.139 \times (D/2)/\rho} \times 10^{-3}$$

where T is twisting number (twists/10cm), D is total denier and $\rho$ is specific gravity of cord.

**Patentansprüche**

1. Radialer LKW-Luftreifen für hohen Innendruck, mit einer Karkasse (1), die eine toroidförmige, radiale Struktur aufweist, und aus einer Vielzahl von Lagen besteht, von denen jede parallel zueinander angeordnete Cordfäden aus organischer Faser enthält, und einem Gürtel (2), der über einer Krone (3) der Karkasse angeordnet ist, um die Reifenlauffläche zu verstärken, und der parallel zueinander angeordnete Cordfäden aus organischer Faser enthält, wobei zum Bilden des Gürtels eine Vielzahl von gummigetränkten Schichten angeordnet wird, von denen jede Cordfäden enthält, die aus Fasern aus Nylon 6, 6-Polymer hergestellt sind, das nicht weniger als 96 Molprozent Polyhexamethylenadipamid-Grundeinheit aufweist, dadurch gekennzeichnet, daß die Fasern der Cordfäden eine Festigkeit von nicht weniger als 9,0 g/d und einen anfänglichen Elastizitätsmodul von nicht mehr als 80 g/d in dem getränkten Zustand des Cordfadens nach dem Verdrillen und Behandeln mit einem Kleber hat.

2. Radialer Luftreifen gemäß Anspruch 1, dadurch gekennzeichnet, daß die Cordfäden der gummigetränkten Schichten sich unter einem Neigungswinkel von 10 bis 70° bezüglich der Äquatorebene des Reifens überkreuzen.

3. Radialer Luftreifen gemäß Anspruch 1 oder 2, dadurch gekennzeichnet, daß der Cordfaden eine Festigkeit von nicht weniger als 9,5 g/d in dem getränkten Zustand hat.

4. Radialer Luftreifen gemäß irgendeinem der Ansprüche 1 bis 3, dadurch gekennzeichnet, daß das Garn, aus dem dieser Cordfaden besteht, einen Verdrillungskoeffizienten NT von 0,3-0,6 hat, der durch die folgende Gleichung wiedergegeben wird:

$$NT = T \times \sqrt{0,139 \times (D/2)/\rho} \times 10^{-3}$$

wobei T die Verdrillungszahl (Verdrillungen/10 cm), D das gesamte Denier, und $\rho$ die Dichte des Cordfadens ist.

**Revendications**

1. Bandage pneumatique à nappe radiale pour poids lourds, destiné à être utilisé en étant soumis à une pression interne élevée, comprenant une carcasse (1) de structure radiale toroïdale composée de plusieurs nappes contenant chacune des câblés en fibres organiques arrangés parallèlement l'un à l'autre, ainsi qu'une ceinture (2) superposée autour d'une couronne (3) de la carcasse pour renforcer la bande de roulement du bandage pneumatique et contenant des câblés en fibres organiques arrangés parallèlement l'un à l'autre, dans lequel ladite ceinture est formée en arrangeant plusieurs couches caoutchouteuses contenant chacune des câblés réalisés en fibres d'un polymère nylon-6,6 ne comportant pas moins de 95 moles % d'unités répétitifs de polyhexaméthylène d'adipamide, caractérisé en ce que les fibres desdits câblés présentent une résistance qui n'est pas inférieure à 9,0 g/d et un module initial qui n'est pas supérieur à 80 g/d lorsque les câblés sont à l'état imprégné après retordage et traitement avec un adhésif.

2. Bandage pneumatique à nappe radiale selon la revendication 1, caractérisé en ce que les câblés desdites couches caoutchouteuses se croisent mutuellement en formant un angle d'inclinaison de 10° à 70° par rapport au plan équatorial du bandage pneumatique.

3. Bandage pneumatique à nappe radiale selon la revendication 1 ou 2, caractérisé en ce que ledit câblé possède une résistance qui n'est pas inférieure à 9,5 g/d à l'état imprégné du câblé.

4. Bandage pneumatique à nappe radiale selon l'une quelconque des revendications 1 à 3, caractérisé en ce que le fil constituant ledit câblé possède un coefficient de torsion NT de 0,3-0,6 représenté par l'équation ci-après:

$$NT = T \times \sqrt{0,139 \times (D/2)/\rho} \times 10^{-3}$$

où T représente le nombre de torsions (torsions/10 cm), D représente le denier total et $\rho$ représente le poids volumique du câblé.

FIG_1

EP 0 320 290 B1

# FIG.2